# EUROPEAN PATENT APPLICATION

(11) **EP 1 270 147 A2**
(43) Date of publication of application: **02.01.2003**
(21) Application number: 02013316.1
(22) Date of filing: 18.06.2002
(51) Int. Cl.: B24B 9/10, B24B 7/24, B23Q 3/06, B23Q 3/16

(54) **Method of setting a machine for machining a sheet of glass, and machine configurable thereby**

(30) Priority: 19.06.2001 IT TO20010594
(71) Applicant: BIMATECH S.r.l., 12010 Cuneo (IT)
(72) Inventor: Tamburini, Marco, 61100 Pesaro (IT); Paci, Luciano, 61100 Pesaro (IT)
(74) Representative: Jorio, Paolo

(57) **Abstract**

A machine (1) for machining sheets of glass has a frame (2), a movable machining head (7), a number of sheet supporting/retaining members (15) (27), a number of sheet locating members (26) (30), and a number of push members (25) (31) for pushing the sheet against the locating members (26) (30); the machine (1) having a number of separate modules (11)(12), each of which has a respective supporting structure (14) connected to the frame (2) to move, with respect to the frame (2), independently of the other supporting structures (14), and supports at least some of the supporting/retaining members (15) (27), locating members (26) (30), and push members (25) (31); the position of the supporting structures (14) of the modules (11) (12) and of the members (15) (27) (26) (30) (25) (31) carried by the modules (11) (12) being adjustable by means of the machining head (7).

## Description

The present invention relates to a method of setting or configuring a machine for machining sheets of glass.

As is known, the peripheral edges and major and/or lateral surfaces of sheets of glass are normally ground, polished, drilled and/or milled. Which operations are performed on machines with different characteristics and comprising, for example, a base; a machining head which can be fitted with various tools selected from a tool store; a number of different individual suction cups; a number of locators; and one or more push assemblies for pushing the work sheet against the locators.

While enabling different machining operations, currently used known machines pose difficulties and involve a good deal of downtime at each production change, which calls for reconfiguring the machine - in particular, repositioning the suction cups, locators and relative push assemblies - according to the shape and size of the new sheet for working. This is normally done manually by the machine operator who, given the characteristics, and in particular the profile of the sheet to be worked, positions the suction cups, locators and push assemblies manually one by one. In addition to the amount of time involved, positioning accuracy thus depends substantially on the skill and experience of the operator, and any positioning errors or inaccuracy result in localized stress on the sheet and/or totally unacceptable interference, mainly between the suction cups and the tool.

It is an object of the present invention to provide a method of setting a machine for machining sheets of glass, designed to provide a straightforward, low-cost solution to the above problems, and which, in particular, provides for faster, cheaper production change, and for greater precision in positioning the various machine members.

According to the present invention, there is provided a method of setting a machine for machining a sheet of glass having a given profile; the machine comprising a frame; a machining head for supporting a tool for machining the sheet; a number of independent sheet supporting and retaining members; and a number of independent sheet positioning members; and the method comprising the steps of adjusting the position of said members alongside variations in the profile of the sheet to be worked; characterized in that the position of said members is adjusted by connecting said machining head to said members to be moved, and by moving the machining head on the basis of data corresponding to the profile of said sheet and stored in a memory on the machine.

The present invention also relates to a machine for machining sheets of glass.

According to the present invention, there is provided a machine for machining sheets of glass; the machine comprising a frame; supporting and retaining means for supporting and retaining a sheet in a plane; positioning means for positioning a sheet in said plane; and a powered machining head for operating a tool for machining the sheet; characterized by comprising a number of distinct modules; each module having a respective supporting structure connected to said frame to move, with respect to the frame, independently of the other supporting structures, and supporting at least some of said positioning means and at least some of said supporting and retaining means; first releasable connecting means being provided to connect said machining head at least to said supporting structures, and to move at least some of said supporting structures with respect to said frame and independently of the position of the other supporting structures.

A non-limiting embodiment of the invention will be described by way of example with reference to the accompanying drawings, in which:
Figure 1 shows a schematic view in perspective of a preferred embodiment of the machine according to the present invention;
Figures 2 and 3 show two larger-scale, schematic views in perspective of two different details of the Figure 1 machine.

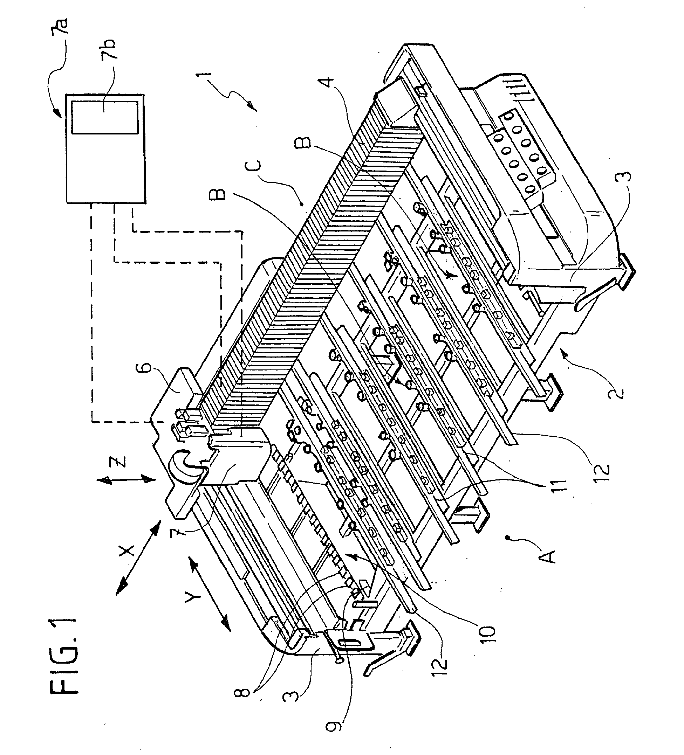

Number 1 in Figure 1 indicates as a whole a machine for machining sheets of glass in general, and coated sheets of glass in particular.

Machine 1 comprises a base 2; two lateral shoulders 3 extending upwards from base 2; and a powered beam 4 extending over base 2, perpendicularly to shoulders 3, and connected to shoulders 3 to move parallel to itself in a direction Y. A powered slide 6 is fitted to beam 4 to slide axially in a direction X, and supports a machining head 7 movable to and from base 2 in a vertical direction Z, and which can be fitted selectively with a number of tools 8 (shown schematically) and a connecting member 9 (shown schematically and described in detail later on) housed in a tool store 10.

Beam 4, slide 6, and machining head 7 are controlled by a control unit 7a (Figure 1) having a memory 7b for storing the geometrical and dimensional characteristics of the various sheets to be worked, and the characteristics and feed sequences of the various lots of sheets to be worked.

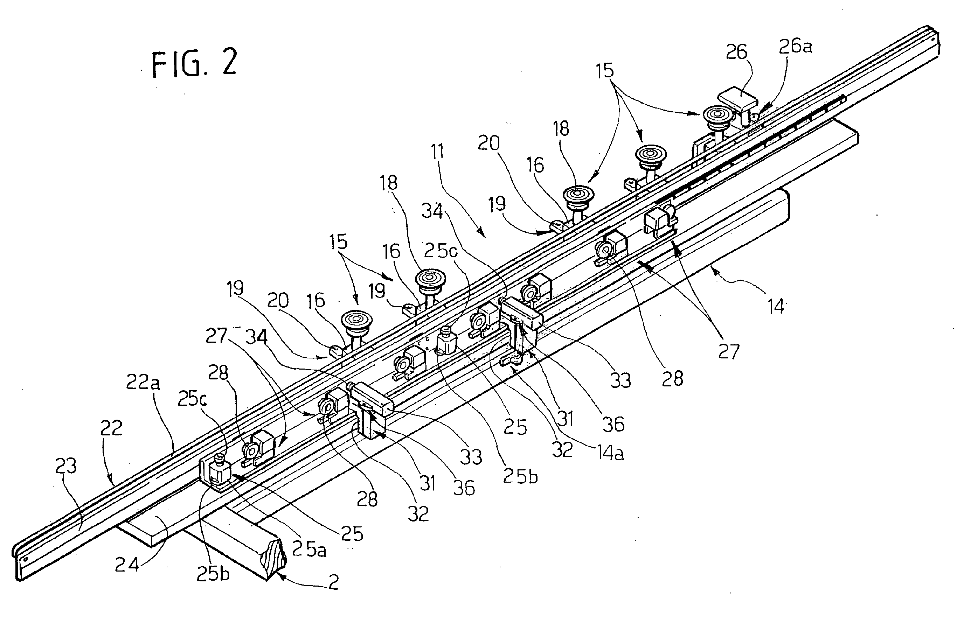

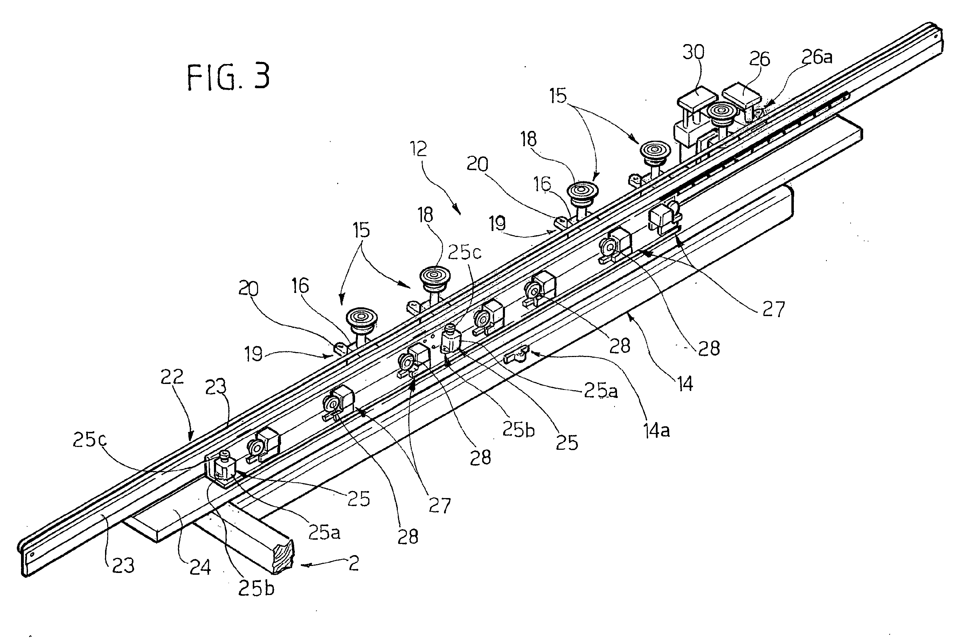

With reference to Figure 1, machine 1 also comprises a number of intermediate modules 11 (Figure 2), and at least one lateral or end module 12 (Figure 3) - in the example described, two lateral modules are provided. Modules 11 and 12 are independent, are fitted adjustably to base 2, between shoulders 3, and can be configured and positioned with respect to base 2 to machine sheets of any shape, size and weight.

With reference to Figure 1, and particularly Figures 2 and 3, each module 11, 12 is independent of the others, and comprises an elongated frame 14 extending parallel to direction Y and connected to base 2 to slide, with respect to base 2, in direction X.

Each frame 14 comprises a connecting portion 14a having a through hole engageable by connecting member 9, and is fitted with a row of conveniently five known suction cup assemblies 15. Each assembly 15 projects laterally from relative frame 14, and has a respective structure 16, which is fitted to a guide (not shown), connected integrally to frame 14, to slide in opposite directions along frame 14 in a direction parallel to direction Y, and in turn supports a suction cup 18 powered to move - under the control of unit 7a, in a direction parallel to direction Z and with respect to relative structure 16 - between a lowered rest position, and a raised work position in which, together with the other suction cups, it defines a supporting surface for the sheet to be worked. Each structure 16 comprises a respective attachment portion 19 having a hole 20 engageable by connecting member 9.

A belt conveyor 22 extends alongside suction cups 18 and along the whole length of frame 14 to receive the sheets at a loading station A, and transfer them to an unloading station C via a work station B over the base. Each conveyor comprises a respective frame 23 fitted to frame 14 in known manner not described in detail to move - parallel to itself in direction Z and under the control of unit 7a - between a lowered rest position, in which a feed branch 22a extends beneath the sheet supporting surface, and a raised position, in which feed branch 22a cooperates with the sheet to be moved and extends substantially coplanar with the supporting surface.

With reference to Figures 2 and 3, a flat portion 24 of each frame 14, on the opposite side of relative conveyor 22 to suction cups 18, is fitted with a number of known front feed assemblies 25 (shown schematically). Each front feed assembly 25 comprises a respective supporting structure 25a connected to frame 14 to slide in direction Y, and in turn comprising an attachment portion 25b having a hole engageable by connecting member 9. Supporting structure 25b is locked releasably with respect to relative frame 14, conveniently by means of a known pneumatic lock device (not shown) controlled by unit 7a. Each feed assembly 25 also comprises a powered feed member 25c, which is movable, under the control of unit 7a, between a lowered position and a raised position to move the sheets, in use and in known manner, in direction Y towards a relative front locator 26 located at the end of the row of assemblies 15 and aligned with the suction cups (Figures 2 and 3).

Each front locator 26 is movable - in direction Z and by means of a respective known linear actuator controlled by unit 7a - between a lowered rest position, in which it extends beneath the supporting surface, and a raised work position, and is connected to relative frame 14 and adjustable along frame 14 in direction Y. Each front locator 26 has an attachment portion 26a engageable by connecting member 9, and is connectable integrally and releasably to frame 14 by means of a pneumatic device controlled by unit 7a.

With reference to Figures 2 and 3, each flat portion 24 supports a number of known swivel-wheel assemblies 27 distributed between and aligned with front feed assemblies 25, and each of which comprises a respective support fixed to flat portion 24, and a respective supporting and push wheel 28, which rotates about a first axis parallel to direction X, and swivels, about a respective axis parallel to direction Y, between a lowered rest position, in which it extends beneath the sheet supporting surface, and a raised position, in which it extends substantially tangent to the supporting surface to retain the sheets conveyed by the relative conveyor, and to push the sheets, in a direction parallel to direction X, against a lateral locator 30. Locator 30 is carried by one of lateral modules 12 (Figure 3), is structurally the same as front locators 26, and is connected to relative frame 14 in the same way as front locators 26.

With reference to Figure 2, each intermediate module 11 also comprises at least two known lateral feed assemblies 31, each of which comprises a respective supporting structure 32, which is connected to frame 14 to slide axially in direction Y and can be locked releasably with respect to frame 14 in the same way as front feed assemblies 25; and a push member 33. Push member 33 comprises a head 34 movable in a direction parallel to direction X and under the control of unit 7a to push the sheets against lateral locators 30, and is fitted to respective structure 32 to slide vertically to and from a lowered position - in which head 34 extends beneath said supporting surface - under the control of a respective actuator (not shown) in turn controlled by unit 7a. Like feed assemblies 25, feed assemblies 31 also comprise respective attachment portions 36 engageable by connecting member 9.

Machine 1 is set as a function of lots or individual sheets, and as a function of the shape and size of the sheets, as follows: connecting member 9 is fitted to machining head 7; and, on the basis of the data in memory 7b, head 7 is moved by unit 7a, and connecting member 9 is connected to attachment portion 14a of a first frame 14. Once the connection is made, head 7 is moved in direction X to move the module 11, 12 connected to it along base 2 into the desired position, in which the module is locked, for example, by an electropneumatic device (not shown) also controlled by unit 7a. The same operations are then repeated for all the other frames 14 of modules 11, 12.

Once frames 14 are positioned and locked to base 2 by performing the above steps for each module 11, 12 - i.e. by connecting connecting member 9 to the various attachment portions 19, 25b, 26a and 36 - relative suction cup assemblies 15, front and lateral locators 26 and 30, and feed assemblies 25 and 31 are moved along relative frame 14, each into a respective position depending on the characteristics of the sheets, and are locked in position with respect to relative frame 14 by unit 7a controlling the respective automatic locking devices.

Once machine 1 is set, conveyors 22 and front and lateral locators 26 and 30 are moved into the raised position, while suction cups 18, feed assemblies 25 and 31, and swivel wheels 28 are maintained in the lowered rest position. At this point, the sheet for machining is fed by a loader (not shown) into loading station A (Figure 1) and onto conveyors 22, which feed it into work station B, where conveyors 22 are stopped and, at the same time, wheels 28 are moved into the raised position, during which movement, wheels 28 gradually support the sheet regardless of its weight. At this point, conveyors 22 are lowered, and feed assemblies 25 and 31 are moved into the raised position and activated to push the sheet against the front and lateral locators; suction cups 18 are then raised to contact the sheet, which is thus gripped by suction; and, once the sheet is gripped, feed assemblies 25 and 31, swivel-wheel assemblies 27, and locators 26 and 30 are lowered into the rest position beneath the supporting surface to free the edge of the sheet, which may thus be machined by head 7, which, in the meantime, has withdrawn the appropriate tool 8 from the tool store.

Once the sheet is machined, conveyors 22 are moved back into the raised position, and the sheet is released by suction cups 18 and fed to unloading station C.

Once the sheets in a given lot have been machined, machine 1 is set again as described above according to the characteristics of the next sheet.

To increase production, machine 1 described comprises two full sets of modules 11, 12 located adjacent to one another on base 2 and so selected as to define two adjacent, independent work stations B. Each station B houses a respective lateral module 12 and a number of intermediate modules 11, and can therefore be loaded with a new sheet while the other station B is still working, so that a continuous stream of similar or different sheets is unloaded at unloading station C.

Unlike known solutions, machine 1 described therefore has the advantage of being fully automatic and requiring no manual intervention on the part of the operator, even during changes in production. This is mainly due to machine 1 comprising a number of sheet positioning, supporting and retaining modules, each of which can be positioned freely as required with respect to base 2 of the machine, and configured as a function of the work sheet characteristics stored in memory 7b. This is made possible by the ability to freely select, for each module 11, 12, the relative position of the sheet locating, positioning, supporting, and retaining members. Machine 1 described is therefore highly versatile, and can perform any machining operation on sheets of any shape, material or weight, and in particular coated sheets, by virtue of the sheet being moved and retained, throughout the machining process, by acting on one surface of the sheet only - the one facing the base - while the opposite surface is never affected.

Using machining head 7 and a single connecting member carried by the head as numerical-control positioning means provides, firstly, for reducing the cost of the machine by employing existing machine components, as opposed to additional parts, and in particular for highly precise, fast positioning of frames 14 and the various members fitted to frames 14, even in the event the new setting calls for moving and reconfiguring all the modules.

Clearly, changes may be made to machine 1 as described herein without, however, departing from the scope of the present invention. In particular, the modules may differ from those described by way of example, and/or may comprise components differing from those shown both in number and type and/or connected to the frame otherwise than as described to machine particular sheets, not necessarily of glass.

Finally, machine 1 may comprise an additional machining head separate from and independent of head 7, but still controlled by unit 7a, to position modules 11, 12 and the relative components as required. In which case, in the event of two or more adjacent work stations, one of the stations could be set up while the others are still working, thus further reducing downtime.

## Claims

1. A method of setting a machine (1) for machining a sheet of glass having a given profile; the machine (1) comprising a frame (2); a machining head (7) for supporting a tool (8) for machining the sheet; a number of independent sheet supporting and retaining members (15) (27); and a number of independent sheet positioning members (26) (30) (25) (31); and the method comprising the steps of adjusting the position of said members (15) (27) (26) (30) (25) (31) alongside variations in the profile of the sheet to be worked; **characterized in that** the position of said members (15) (27) (26) (30) (25) (31) is adjusted by connecting said machining head (7) to said members (15)(27)(26)(30)(25)(31) to be moved, and by moving the machining head (7) on the basis of data corresponding to the profile of said sheet and stored in a memory (7b) on the machine (1).

2. A method as claimed in Claim 1, **characterized in that** the position of said members (15) (27) (26) (30) (25) (31) is adjusted by connecting said members (15)(27)(26)(30)(25)(31) successively to said machining head (7).

3. A method as claimed in Claim 1 or 2, **characterized in that** said machining head (7) is connected to said members (15) (27) (26) (30) (25) (31) by connecting to said members (15) (27) (26) (30) (25) (31) a connecting member (9) common to all the members carried by said machining head (7).

4. A method as claimed in any one of the foregoing Claims, **characterized in that** the position of said members (15) (27) (26) (30) (25) (31) is adjusted by grouping some of said members (15) (27) (26) (30) (25) (31) on respective supports (14) movable with respect to said frame (2) and independent of one another, and by moving said supports by means of said machining head (7).

5. A machine (1) for machining sheets of glass; the machine (1) comprising a frame (2); supporting and retaining means (15) (27) for supporting and retaining a sheet in a plane; positioning means (26) (30) (25) (31) for positioning a sheet in said plane; and a powered machining head (7) for operating a tool (8) for machining the sheet; **characterized by** comprising a number of distinct modules (11) (12); each module (11) (12) having a respective supporting structure (14) connected to said frame (2) to move, with respect to the frame (2), independently of the other supporting structures (14), and supporting at least some of said positioning means (26) (30) (25) (31) and at least some of said supporting and retaining means (15) (27); first releasable connecting means (9) being provided to connect said machining head (7) at least to said supporting structures (14), and to move at least some of said supporting structures (14) with respect to said frame (2) and independently of the position of the other supporting structures (14).

6. A machine as claimed in Claim 5, **characterized in that** said supporting and retaining means (15) (27) comprise, for each said module (11) (12), at least one supporting and retaining member (18) (28) connected to the relative said supporting structure (14); second releasable connecting means (9) being provided to connect said machining head (7) to said supporting and retaining member (18) (28).

7. A machine as claimed in Claim 6, **characterized by** also comprising first powered actuating means separate from said machining head (7) and for adjusting the position of said supporting and retaining member (18) (28) with respect to the relative supporting structure (14).

8. A machine as claimed in Claim 6 or 7, **characterized in that** each said module (11) (12) comprises a number of said supporting and retaining members (18) (28) fitted to the relative said supporting structure (14) and independent of one another; said machining head (7) adjusting the position of said supporting and retaining members (18) (28) by moving each said supporting and retaining member independently of the other supporting and retaining members.

9. A machine as claimed in Claim 8, **characterized in that** said supporting and retaining members (18) (28) are aligned and adjustable in a direction (Y) crosswise to a direction (X) of movement of the respective supporting structure (14).

10. A machine as claimed in any one of Claims 5 to 9, **characterized in that** said supporting and retaining means (15) (27) comprise, for each said module (11) (12), at least one rolling body (28) cooperating in rolling manner with said sheet and swiveling to support said sheet; further releasable connecting means (9) being provided to connect said machining head (7) to said rolling body (28).

11. A machine as claimed in any one of Claims 5 to 9, **characterized in that** said positioning means (26) (30) (25) (31) comprise, for each said module (11) (12), at least one locating member (26) (30) fitted releasably to the respective said supporting structure (14); third releasable connecting means (9) being provided to connect said machining head (7) to said locating member (26) (30).

12. A machine as claimed in Claim 11, **characterized by** also comprising second powered actuating means separate from said machining head (7) and for adjusting the position of said locating member (26) (30) with respect to the relative said supporting structure (14).

13. A machine as claimed in Claim 11 or 12, **characterized in that** said positioning means (26) (30) (25) (31) comprise, for each said module (11) (12), at least one push member (25) (31) for pushing said sheet in said plane towards said locating member (26) (30), and which is moved by said machining head (7).

14. A machine as claimed in any one of Claims 5 to 13, **characterized in that** each said module also comprises respective conveying means (22) carried by the relative said supporting structure (14) to transfer said sheet from an input area (A) of the machine (1) to an output area (C) of the machine (1) via a work station (B) for working the sheet.

15. A machine as claimed in Claim 14, **characterized in that** said conveying means comprise a belt conveyor (22), a feed branch (23) of which extends in a direction (Y) perpendicular to a direction (X) of movement of said modules (11) (12) with respect to said frame (2).

16. A machine as claimed in any one of Claims 5 to 15, **characterized in that** said modules (11) (12) are grouped into at least two groups of side by side modules to define respective adjacent work stations (B); control means (7a) being provided to control each group of modules (11) (12) independently of the other group of modules.
